Europäisches Patentamt

European Patent Office

Office européen des brevets

(11) Publication number: **0 204 531**
**B1**

# EUROPEAN PATENT SPECIFICATION

(45) Date of publication of the patent specification:
**12.09.90**

(51) Int. Cl.⁵: **B29C 35/08**

(21) Application number: **86304152.1**

(22) Date of filing: **30.05.86**

(54) **Production of molded vulcanised rubber articles.**

(30) Priority: **03.06.85 JP 120828/85**

(43) Date of publication of application:
**10.12.86 Bulletin 86/50**

(45) Publication of the grant of the patent:
**12.09.90 Bulletin 90/37**

(84) Designated Contracting States:
**DE FR GB IT NL**

(56) References cited:
**DE-A- 3 013 723**
**FR-A- 1 291 135**
**GB-A- 922 531**

**KAUTSCHUK & GUMMI KUNSTSTOFFE, vol. 37, no. 10, October 1984, pages 864-868, Heidelberg, DE; A.M. SONNENBERG: "Electron beam vulcanization of elastomers"**

(73) Proprietor: **SUMITOMO CHEMICAL COMPANY, LIMITED, Kitahama 4-chome 5-33, Chuo-ku Osaka 541(JP)**

(72) Inventor: **Aoshima, Masashi, No. 2-16-28, Higashiota, Ibaraki-shi Osaka(JP)**
Inventor: **Jinno, Tadashi, No. 2-3-30-104, Wakayamadai Shimamoto-cho, Mishima-gun Osaka(JP)**

(74) Representative: **Diamond, Bryan Clive et al, Gee & Co., Chancery House, Chancery Lane, London WC2A 1QU(GB)**

ACTORUM AG

## Description

The present invention relates to a process for producing rubber products by vulcanizing a molded article composed of a rubber composition containing a peroxide as a crosslinking agent in the presence of oxygen, wherein the molded article is irradiated with electron beams.

Compared with vulcanization of rubbers with sulfur, the technique of vulcanization with peroxides used as crosslinking agents offers superior heat resistance, compression set, and electrical insulation for molded articles and superior properties in compounding with colored substances, e.g., coloration and stability of color. Vulcanization with peroxides has therefore enjoyed extensive commercial use in applications where the aforementioned properties are particularly important.

However, as is well known, vulcanization with peroxides is hindered by oxygen and, if the vulcanization is carried out in the presence of air, crosslinking reaction does not proceed to an adequate extent on the surface of the resulting molded article which is in contact with air, leading to various problems such as causing extreme tackiness, reduction in strength, and insufficient hardness. These problems cause the defects that the surface of the molded article is readily scratched and is poor in wear resistance and slipperiness.

Accordingly, vulcanization with peroxides is generally applied to the production of rubber products using a vulcanization step shielded from air, such as press molding, injection molding or transfer molding. In the case of autoclave cure which is a commercial technique for fabricating hoses and electric cables, products satisfying practical requirements can be obtained by replacing air (oxygen) with steam. However, in order to yield products of consistent quality, utmost care must be exercized in process control.

Continuous vulcanization of rubbers has recently gained commercial acceptance, and industrially important rubber products such as hoses, weather strips, and roofing sheets are currently produced by the continuous vulcanization method. While continuous vulcanization can be performed by various methods, the most commonly employed techniques are hot-air vulcanization (HAV) which may be in a fluidized bed (FBV), and ultra-high frequency vulcanization (UHF). However, in each of these methods the vulcanization is in the presence of air and, hence, they are not suitable for vulcanization with peroxides.

GB-A-922 531 discloses a process for curing (i.e. vulcanizing) a natural or synthetic rubber product, such as a sheet, containing a small proportion of an organic peroxide, by irradiation with a beam of electrons; and in the presence or absence of oxygen. The irradiation and hence the vulcanizing may be limited to a given depth of the material, e.g. for the outer covering of golf balls. There is no separate thermal vulcanization step.

We have now devised a continuous method of vulcanization with peroxides which is capable of providing rubber products with excellent heat resistance and compression set.

The present invention provides a process for producing a rubber product by subjecting a molded article composed of a rubber composition containing a peroxide as a crosslinking agent, whose surface becomes tacky because of vulcanization hindrance by oxygen when thermal vulcanization is carried out in the presence of oxygen, to continuous thermal vulcanization in the presence of oxygen, selected from hot-air vulcanization, steam vulcanization, ultra-high frequency vulcanization and fluidized bed vulcanization, wherein a surface layer of said molded article is crosslinked upon irradiation with electron beams prior to the thermal vulcanization.

In accordance with the process of the present invention, a molded rubber article is subjected, before vulcanization with a peroxide, to irradiation with electron beams to an appropriate degree so as to vulcanize a surface layer of the molded rubber.

The term "vulcanization" as used herein means vulcanization which is performed in the presence of air (or oxygen). The vulcanization may be carried out by using a vulcanization system wherein a heating medium such as steam or heated nitrogen gas is present when air (oxygen) is not fully replaced by the heating medium such as steam or heated nitrogen gas.

Vulcanization may be carried out in the present invention by employing the aforementioned HAV, UHF or FBV process. Vulcanization may also be performed in a batch system by, for example, autoclave cure or oven cure.

The method and conditions of irradiation with electron beams are not critical, and appropriate acceleration voltages, irradiation doses and irradiation equipment may be selected depending on specific use of the final product. The acceleration voltage typically is from 100 to 500 KV and more suitably from 150 to 400 kV, and the irradiation dose from 1 to 40 Mrad and more suitably from 2 to 30 Mrad. However, these ranges may be suitably adjusted as needed.

The electron beam causes vulcanisation of only the surface layer, to a depth of about 0.05 to 2 mm.

The rubber composition treated by the present invention is characterized by the presence of a peroxide as a crosslinking agent. While the peroxide usable as a crosslinking agent is not limited to any particular compounds, illustrative examples include dicumyl peroxide, 1,3-bis(t-butylperoxyisopropyl)benzene, 2,5-dimethyl-2,5-di(t-butylperoxy)hexane, 1,1-di-t-butylperoxy-3,3,5-trimethylcyclohexane, cumene hydroperoxide, di-t-butyl peroxide, t-butylcumyl peroxide, p-chlorobenzoyl peroxide, t-butyl peroxybenzoate and t-butylperoxyisopropyl carbonate.

crosslinking agent, a variety of ingredients such as rubber bases, resins, carbon black, talc, clay, calcium carbonate, silica, process oils, processing aids, activators, crosslinking aids, antioxidants, pigments, foaming agents, foaming aids, and any other necessary components. If desired, a variety of short fibers may be incorporated in the rubber composition.

Illustrative rubber bases include styrene-butadiene rubber, ethylene-propylene rubber, acrylonitrile-butadiene rubber, chlorinated ethylene-propylene rubber, chlorinated polyethylene, chlorosulfonated polyethylene, silicone rubber, and fluorinated rubber. Natural rubber and chloroprene rubber may be used as required. Illustrative resins include polyethylene, polypropylene, an ethylene-vinyl acetate copolymer, and polyvinyl chloride.

Illustrative processing aids include agents that serve to improve the dispersibility of fillers during mastication, tackifiers, and extrusion aids. Illustrative activators include a variety of metal oxides such as zinc white and zinc stearate, glycols, and amines.

Illustrative crosslinking aids that assist the vulcanization with peroxides include a variety of sulfur compounds, oximes, maleimides, and methacrylic acid esters.

The types and amounts of these ingredients and the peroxide used as a crosslinking agent are properly selected and determined in accordance with the specific properties required for the final rubber product.

The composition used in the present invention may be prepared by blending appropriate ingredients with rubber by means of a suitable machine such as a Banbury mixer, a kneader, or a roll, and is subsequently molded by means of a calendar roll or an extruder.

By employing the process of the present invention, rubber products such as hoses, rubber sheets, roofing sheets, canvas sheets, weather strips, sealing sponge, protector tubes, and protector sponge having excellent heat resistance, compression set, and electrical insulation can be obtained. In addition, the rubber products obtained are not sticky on the surface and exhibit excellent tensile properties.

The following examples are provided for the purpose of further illustrating the present invention and are by no means intended to limit the invention.

Example 1

A peroxide-loaded rubber composition having the recipe indicated below was masticated on rolls (10 in 25.4 cm ⌀), and the admixture was fed into an appropriate extruder for rubber (ID: 45 mm⌀) from which a sheet having a thickness of 3 mm and a width of 40 mm was extrusion molded.

## Rubber recipe

|  | Parts by Weight |
|---|---|
| Esprene® 501A*1 | 100 |
| Zinc white | 5 |
| Stearic acid | 1 |
| FEF carbon black | 90 |
| Paraffinic process oil | 30 |
| Perhexa® 3M*2 | 3 |
| Ethylene glycol dimethylacrylate | 1 |

*1: Esprene® 501A, EPDM (ethylene-propylene-diene terpolymer) of Sumitomo Chemical Co., Ltd.

*2: Perhexa® 3M, 1,1-di-t-butylperoxy-3,3,5-trimethyl cyclohexane (peroxide) of Nippon Oils & Fats Co., Ltd.

Both sides of the sheet were irradiated with electron beams at an acceleration voltage of 150 kV to give a total dose of 20 Mrad. The irradiated sheet was then vulcanized in a gear oven (in air) at 150°C for 15 minutes. Data on the surface stickiness, tensile strength, and elongation of the vulcanized rubber sheet are given in Table 1, which clearly demonstrates the improvement attained by irradiation with electron beams.

Example 2

A sample of an irradiated rubber sheet which was of the same type as obtained in Example 1 was vulcanized by autoclave cure at 150°C for 15 minutes. The results are shown in Table 1.

Comparative Example 1

A sample of a green rubber sheet which was of the same type as that extrusion molded in Example 1 was vulcanized in a gear oven (in air) at 150°C for 15 minutes. The vulcanized rubber sheet was very sticky and had reduced tensile properties, as is evident from Table 1.

Comparative Example 2

A sample of a green rubber sheet which was of the same type as that extrusion molded in Example 1 was subjected to autoclave cure at 150°C for 15 minutes. The results were unsatisfactory as shown in Table 1.

Comparative Example 3

A rubber composition having the recipe shown in Example 1 was vulcanized on a heat press at 150°C for 10 minutes. Data on the surface stickiness and tensile properties of the vulcanized rubber are shown in Table 1. The vulcanization system employed in this comparative example permitted no contact with oxygen and, hence, produced satisfactory results.

## Table 1

| Run No. | Example 1 | Example 2 | Comparative Example 1 | Comparative Example 2 | Comparative Example 3 |
|---|---|---|---|---|---|
| Vulcanization method | Gear-oven vulcanization after irradiation with electron beams | Autoclave cure after irradiation with electron beams | Mere vulcanization in gear oven | Mere auto-clave cure | Press vulcanization |
| Tensile strength*3 | 109 | 107 | 80 | 85 | 112 |
| Tensile elongation (%) | 260 | 270 | 280 | 270 | 280 |
| Surface stickiness of vulcanized rubber | None | None | Very sticky | Sticky | None |

*3: Tensile test was conducted in accordance with JIS K6301.

EP 0 204 531 B1

## Claims

1. A process for producing a rubber product by subjecting a molded article composed of a rubber composition containing a peroxide as a crosslinking agent, whose surface becomes tacky because of vulcanization hindrance by oxygen when thermal vulcanization is carried out in the presence of oxygen, to continuous thermal vulcanization in the presence of oxygen, selected from hot-air vulcanization, steam vulcanization, ultra-high frequency vulcanization and fluidized bed vulcanization wherein a surface layer of said molded article is crosslinked upon irradiation with electron beams prior to the thermal vulcanization.

2. A process as claimed in Claim 1, wherein the irradiation is at an acceleration voltage of 100 to 500 KV and a dose of 1 to 40 Mrad.

3. A process as claimed in Claim 1 or 2, wherein said peroxide is selected from dicumyl peroxide, 1,3-bis(t-butylperoxyisopropyl) benzene, 2,5-dimethyl-2,5-di(t-butylperoxy) hexane, 1,1-di-t-butylperoxy-3,3,5-trimethylcyclohexane, cumene hydroperoxide, di-ti-butyl peroxide, t-butylcumyl peroxide, p-chlorobenzoyl peroxide, t-butyl peroxybenzoate and t-butylperoxyisopropyl carbonate.

4. A process as claimed in any preceding claim, wherein the rubber in the composition is styrene-butadiene rubber, ethylene-propylene rubber, acrylonitrile-butadiene rubber, chlorinated ethylene-propylene rubber, chlorinated polyethylene, chlorosulfonated polyethylene, silicone rubber, fluorinated rubber, natural rubber or chloroprene rubber.

## Patentansprüche

1. Verfahren zur Herstellung eines Kautschuk-Produktes durch Behandlung eines Formkörpers aus einer Kautschukmasse, die ein Peroxid als Vernetzungsmittel enthält, dessen Oberfläche klebrig wird infolge von Vulkanisationsbehinderung durch Sauerstoff, wenn thermische Vulkanisation in Gegenwart von Sauerstoff vorgenommen wird, in kontinuierlicher thermischer Vulkanisation in Gegenwart von Sauerstoff, ausgewählt aus Heißluft-Vulkanisation, Dampf-Vulkanisation, Ultrahochfrequenz-Vulkanisation und Fließbett-Vulkanisation, wobei eine Oberflächenschicht des Formkörpers durch Bestrahlung mit Elektronenstrahlen vor der thermischen Vulkanisation vernetzt wird.

2. Verfahren nach Anspruch 1, wobei die Bestrahlung mit einer Beschleunigungsspannung von 100 bis 500 KV und einer Dosis von 1 bis 40 Mrad durchgeführt wird.

3. Verfahren nach Anspruch 1 oder 2, wobei das Peroxid ausgewählt ist aus Dicumylperoxid, 1,3-Bis(tert.-butylperoxyisopropyl)-benzol, 2,5-Dimethyl-2,5-di(tert.-butylperoxy)-hexan, 1,1-Di-tert.-butyl-peroxy-3,3,5-trimethylcyclohexan, Cumolhydroperoxid, Di-tert.-butylperoxid, tert.-Butylcumylperoxid, p-Chlorbenzoylperoxid, tert.-Butylperoxybenzoat und tert.-Butylperoxyisopropylcarbonat.

4. Verfahren nach einem der vorangehenden Ansprüche, wobei der Kautschuk in der Masse Styrol-Butadien-Kautschuk, Ethylen-Propylen-Kautschuk, Acrylnitril-Butadien-Kautschuk, chlorierter Ethylen-Propylen-Kautschuk, chloriertes Polyethylen, chlorsulfoniertes Polyethylen, Silikonkautschuk, fluorierter Kautschuk, natürlicher Kautschuk oder Chloropren-Kautschuk ist.

## Revendications

1. Un procédé de production d'un produit de caoutchouc consistant à soumettre un article moulé, composé d'une composition de caoutchouc contenant un peroxyde comme agent de réticulation, dont la surface devient collante en raison du masquage de la vulcanisation par l'oxygène lorsque la vulcanisation thermique est conduite en présence de l'oxygène, à une vulcanisation thermique continue en présence de l'oxygène, choisie parmi la vulcanisation par l'air chaud, la vulcanisation par la vapeur d'eau, la vulcanisation à ultra haute fréquence et la vulcanisation en lit fluidisé, procédé selon lequel une couche de surface dudit article moulé est réticulée par irradiation par des faisceaux d'électrons avant la vulcanisation thermique.

2. Un procédé selon la revendication 1, selon laquelle l'irradiation se fait à une tension d'accélération de 100 à 500 kV et à une dose de 1 à 40 Mrad.

3. Un procédé selon la revendication 1 ou 2, selon laquelle ledit peroxyde est choisi parmi les suivants : peroxyde de dicumyle, 1,3-bis(t-buylperoxyisopropyl)benzène, 2,5-diméthyl-2,5-di(t-butylperoxy)hexane, 1,1-di-t-butylperoxy-3,3,5-triméthylcyclohexane, hydroperoxyde de cumène, peroxyde de di-t-butyle, peroxyde de t-butylcumyle, peroxyde de p-chlorobenzoyle, peroxybenzoate de t-butyle et carbonate de t-butylperoxyisopropyle.

4. Un procédé selon l'une quelconque des revendications précédentes, selon laquelle le caoutchouc dans la composition est du caoutchouc de styrène-butadiène, du caoutchouc d'éthylène-propylène, du caoutchouc d'acrylonitrile-butadiène, du caoutchouc d'éthylène chloré-propylène, du polyéthylène chloré, du polyéthylène chlorosulfoné, du caoutchouc de silicone, du caoutchouc fluoré, du caoutchouc naturel ou du caoutchouc de chloroprène.